# EUROPÄISCHE PATENTSCHRIFT

(11) **EP 3 497 346 B1**
(45) Veröffentlichungstag und Bekanntmachung des Hinweises auf die Patenterteilung: **25.11.2020**
(21) Anmeldenummer: 17748764.2
(22) Anmeldetag: 04.08.2017
(51) Int. Cl.: F16C 35/063, F16C 35/067, F16C 25/08, B62D 1/16, B62D 5/04, F16C 19/06

(54) **HALTERING FÜR DIE AXIALE FIXIERUNG EINES DREHLAGERS EINER LENKVORRICHTUNG FÜR KRAFTFAHRZEUGE**
HOLDING RING FOR THE AXIAL FIXING OF A ROTARY BEARING OF A STEERING APPARATUS FOR MOTOR VEHICLES
BAGUE DE RETENUE POUR LA FIXATION AXIALE D'UN PALIER ROTATIF D'UN DISPOSITIF DE DIRECTION POUR VÉHICULES À MOTEUR

(30) Priorität: 08.08.2016 DE 102016114677
(43) Veröffentlichungstag der Anmeldung: 19.06.2019
(73) Patentinhaber: thyssenkrupp Presta AG, 9492 Eschen (LI); thyssenkrupp AG, 45143 Essen (DE)
(72) Erfinder: SULSER, Hansjoerg, 9487 Gamprin (LI); VONIER, Felix, 6780 Schruns (AT)
(74) Vertreter: thyssenkrupp Intellectual Property GmbH
(86) Internationale Anmeldenummer: PCT/EP2017/069781
(87) Internationale Veröffentlichungsnummer: WO 2018/029098

(56) Entgegenhaltungen:
- BE-A- 561 920
- DE-A1- 3 001 121
- JP-A- H11 171 026
- JP-A- 2008 256 116
- JP-A- 2013 151 221
- SU-A1- 1 732 034

## Beschreibung

Die Erfindung betrifft eine Lenkvorrichtung für Kraftfahrzeuge, umfassend ein Drehlager und einen Haltering für die axiale Fixierung eines Drehlagers einer Lenkvorrichtung für Kraftfahrzeuge an einem drehbaren Bauteil mit einer zylinderförmigen Außenfläche, auf die eine innere Lagerschale des Drehlagers aufgesteckt ist, wobei der Haltering zumindest eine Federzunge aufweist, die in axialer Richtung federnd an der inneren Lagerschale anliegt.

Weiterhin betrifft die Erfindung eine Lenkvorrichtung für Kraftfahrzeuge, umfassend ein Drehlager und einen Haltering für die axiale Fixierung eines Drehlagers einer Lenkvorrichtung für ein Kraftfahrzeug in einem gehäuseartigen Bauteil mit einer zylinderförmigen Innenfläche in die eine äußere Lagerschale des Drehlagers eingesteckt ist, wobei der Haltering zumindest eine Federzunge aufweist, die in axialer Richtung federnd an der äußeren Lagerschale anliegt.

Ein derartiger Haltering ist beispielsweise aus der JP 5 786 731 B2 bekannt. Hier ist der Lagerring auf einer Lenkwelle mittels eines axialen Sicherungselements fixiert, welches in eine Nut der Lenkwelle eingreift. Dadurch stützt sich der Haltering in axialer Richtung an einer Flanke der Nut der Lenkwelle ab, während seine Federzungen axial federnd gegen das Drehlager drücken und dieses auf der Lenkwelle fixieren. Ein ähnlicher, gattungsgemäßer Haltering ist auch aus der JP H 11-171026 bekannt. Auch hier ist der Haltering mittels einer Nut auf einer Lenkwelle fixiert. Die bekannten Anordnungen haben beide den Nachteil, dass für die Fixierung des Halterings jeweils eine Nut auf den drehbaren Bauteilen, hier den Lenkwellen, erforderlich ist.

Aufgabe der Erfindung ist es, einen verbesserten Haltering der eingangs genannten Art anzugeben, der leicht montierbar ist und einen geringeren Fertigungsaufwand der Lenkvorrichtung ermöglicht.

Gelöst wird die Aufgabe durch die Merkmale des Patentanspruchs 1 und 10. Vorteilhafte Weiterbildungen ergeben sich aus den Unteransprüchen.

Die Erfindung löst diese Aufgabe dadurch, dass der Haltering radial nach innen ragende elastische Fixierzungen aufweist, die sich im entspannten Zustand bis in den radialen Bereich des drehbaren Bauteils erstrecken, so dass sie beim Aufschieben des Haltering auf die zylinderförmige Außenfläche des drehbaren Bauteils elastisch in eine der Aufschieberichtung entgegengesetzte axiale Richtung ausgelenkt werden und an der zylinderförmigen Außenfläche des drehbaren Bauteils mit radialer Vorspannkraft anliegen. Mit Vorteil benötigt der erfindungsgemäße Haltering für seine Fixierung keine Nuten auf dem drehbaren Bauteil und seine Fixierzungen können einfacher ausgestaltet sein als die aus dem Stand der Technik bekannten Fixierelemente. Der erfindungsgemäße Haltering benötigt zur axialen Fixierung lediglich die Außenfläche des drehbaren Bauteils, auf der er in jeder beliebigen axialen Position befestigt werden kann.

Mit Vorteil sind die Fixierzungen in eine dem Drehlager abgewandte Richtung gebogen ausgestaltet. Damit sind sie in derselben Richtung plastisch verformt, in die beim Aufschieben auf das drehbare Bauteil eine elastische Verformung erfolgt, welche deshalb einen geringeren Kraftaufwand erfordert. Außerdem wird durch die gebogene Ausgestaltung der Fixierzungen eine weitere Ausgestaltung der Erfindung ermöglicht, wonach die Fixierzungen mit ihren radial inneren Kanten gegen die zylinderförmige Außenfläche des drehbaren Bauteils drücken und sich in dessen Außenfläche eingraben. Insbesondere wenn die Fixierzungen aus einem härteren Material als das drehbare Bauteil bestehen und ihre radial inneren Kanten besonders scharf ausgestaltet sind, graben sie sich besonders gut in die Außenfläche des drehbaren Bauteils ein. Dort sind die Fixierzungen dann praktisch genauso fest gegen Verschiebungen in axialer Richtung fixiert wie in den vom Stand der Technik bekannten Nuten.

In einer vorteilhaften Weiterbildung weist der Haltering zumindest drei Federzungen und/oder drei Fixierzungen auf. Besonders bevorzugt sind die Federzungen und/oder die Fixierzungen gleichmäßig über den Umfang des Halterings verteilt angeordnet.

In Ausgestaltung der Erfindung sind mehrere radial nach innen ragende Federzungen vorgesehen, die in Richtung des Drehlagers abgewickelt sind. Dadurch liegen die Federzungen an mehreren Stellen des Drehlagers axial federnd an. Die besten Ergebnisse bezüglich der axial federnden Anlage erhält man, wenn die Federzungen gegenüber einer zur Drehachse des drehbaren Bauteils orthogonalen Ebene einen Winkel zwischen 15° und 45° aufweisen.

Eine Weiterbildung der Erfindung sieht vor, dass die Federzungen abwechselnd mit den Fixierzungen in Umfangsrichtung verteilt angeordnet sind. Durch diese Maßnahme wird die über eine Federzunge eingeleitete Axialkraft direkt über die in Umfangsrichtung benachbarten Fixierzungen an dem drehbaren Bauteil abgestützt und die durch die einzelnen Federzungen eingeleiteten Teilkräfte sind gleichmäßig über den gesamten Umfang des Halterings verteilt.

In einer bevorzugten Ausführungsform wird empfohlen, dass der Haltering aus Federstahl besteht. Dieses Material gewährleistet die Übertragung hoher elastischer Verformungskräfte, die zur Fixierung des Drehlagers erforderlich sind.

In einer ersten bevorzugten Anwendung der Erfindung ist vorgesehen, dass das drehbare Bauteil eine Lenkwelle ist. Es ist besonders wichtig, dass Lenkwellen in axialer Richtung steif abgestürzt werden, um dem Fahrer ein sicheres Gefühl zu vermitteln.

Die erfindungsgemäße Lösung ist nicht nur auf manuell verstellbare Lenksäulen beschränkt. Der erfindungsgemäße Haltering kann ebenfalls bei einer unverstellbaren Lenksäule oder bei einer elektrisch-verstellbaren Lenksäule zum Einsatz kommen. Ebenfalls ist es denkbar und möglich, dass der erfindungsgemäße Haltering bei Lenksystemen zum Einsatz kommt, bei denen es keinen mechanischen Durchgriff zwischen dem Lenkrad und dem Lenkgetriebe gibt, sogenannte Steer-by-Wire Lenksysteme.

In einer zweiten bevorzugten Anwendung der Erfindung ist das drehbare Bauteil eine KGT-Mutter (eines KGT=Kugelgewindetriebs) einer elektrischen Servolenkung. Auch hier ist es wichtig, dass die KGT-Mutter in axialer Richtung steif abgestützt wird, weil eine elastische axiale Verschiebung zwischen der KGT-Mutter und der zugehörigen Spindel, auf der die KGT-Mutter sitzt, zu einer Veränderung des Lenkeinschlags führen würde.

Bevorzugt ist das Drehlager als Wälzlager ausgebildet, welches zumindest einen Wälzkörper, einen Innenringen, einen Aussenring und bevorzugt einen Käfig umfasst. Dabei kann es vorgesehen sein, dass das Wälzlager als ein Radialrillenkugellager, ein Vierpunktlager oder ein Schrägkugellager ausgebildet ist.

Weiterhin wird die Aufgabe durch einen Haltering gelöst, der radial nach außen ragende elastische Fixierzungen aufweist, die sich im entspannten Zustand bis in den radialen Bereich des gehäuseartigen Bauteils erstrecken, so dass sie beim Einschieben des Halterings in die zylinderförmige Innenfläche des gehäuseartigen Bauteils elastisch in eine der Einschieberichtung entgegengesetzte axiale Richtung ausgelenkt werden und an der Innenfläche des gehäuseartigen Bauteils mit radialer Vorspannkraft anliegen.

Unter einem gehäuseartigen Bauteil ist zu verstehen, dass dieses ein Drehlager aufnhemen kann um ein drehbares Bauteil drehbar zu lagern. Bevorzugt ist das gehäuseartige Bauteil als Mantelrohr ausgebildet. Bevorzugt können die Fixierzungen mit radial äußerer Kanten gegen die zylinderförmige Innenfläche des gehäuseartigen Bauteils drücken und sich in die Innenfläche eingraben.

Bevorzugt weist der Haltering mehrere radial nach außen ragende Federzungen auf, die in Richtung des Drehlagers abgewickelt sind.

Soweit anwendbar, können alle vorteilhaften Weiterbildungen der erfinderischen Lösung des Patentanspruchs 1 auf die erfinderische Lösung des Patentanspruchs 10 sinngemäß ohne erfinderisch Zutun übertragen werden.Unter der zylinderförmigen Außenfläche oder zylinderförmigen Innenfläche ist nicht nur auf eine kreiszylindrische Außenfläche oder zylinderförmigen Innenfläche beschränkt. Die zylindrischen Außenfläche oder zylindrischen Innenfläche ist durch eine äußere bzw. innere Mantelfläche eines Zylinders bzw. Hohlzylinders gebildet, der eine beliebige Querschnittsfläche bzw. Hohlquerschnittsfläche aufweist. Konkret kann es vorgesehen sein, dass die Außenfläche oder die Innenfläche durch die Mantelfläche eines Kreiszylinder eines hohlen Kreiszylinders oder durch die Mantelfläche eines im Wesentlichen rechteckigen bzw. quadratischen Zylinders bzw. Hohlzylinders bestimmt ist.

Bevorzugt ist die zylindrische Außenfläche oder die zylindrische Innenfläche kreiszylindrisch.

Ausführungsbeispiele der Erfindung werden nachfolgend anhand der Zeichnungen erläutert. Die Figuren zeigen im Einzelnen:
- Figur 1:: eine schematische perspektivische Darstellung eines Lenksystems eines Kraftfahrzeugs;
- Figur 2:: einen lenkradseitigen Abschnitt einer Lenksäule in einer perspektivischen Darstellung;
- Figur 3:: eine geschnittene Teilansicht der Lenksäule von Figur 2;
- Figur 4:: ein vergrößertes Detail aus Figur 3 eines Drehlagers einer Lenkwelle;
- Figur 5:: ein erfindungsgemäßer Haltering in einer perspektivischen Darstellung;
- Figur 6:: eine Draufsicht eines erfindungsgemäßen Halterings;
- Figur 7:: eine Schnittansicht eines erfindungsgemäßen Halterings in einer vergrößerten Darstellung;
- Figur 8:: eine mit einer Zahnstange verbundene Spindel mit darauf angeordneter drehbar gelagerter KGT-Mutter;
- Figur 9:: ein vergrößertes Detail aus Figur 8 eines Drehlagers der KGT-Mutter, und
- Figur 10: ein vergrößertes Detail eines Drehlagers einer Lenkwelle in einer alternativen Ausführungsform.

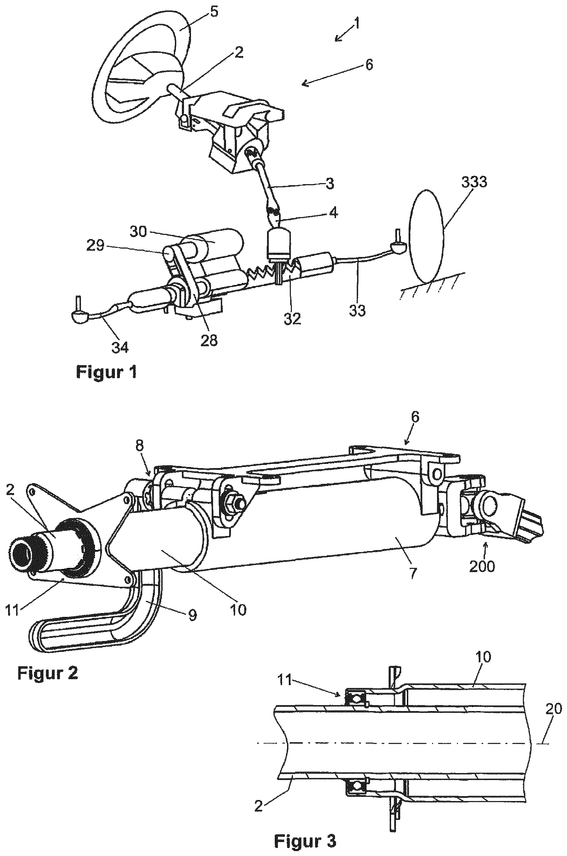

In Figur 1 erkennt man ein Lenksystem eines Kraftfahrzeugs mit einer Lenksäule, die eine mehrteilige Lenkwelle 2, 3, 4 umfasst. Ein Lenkrad 5 ist mit einer lenkradseitigen Lenkwelle 2 verbunden, die mittels eines Trägers 6 am Chassis eines nicht gezeigten Kraftfahrzeugs befestigbar ist.

In Figur 2 erkennt man den Träger 6, an welchem ein Klemmrohr 7 höhen- und längsverstellbar befestigt ist. Zur Verstellung gehört eine Spannvorrichtung 8, die durch einen Betätigungshebel 9 zugespannt oder gelöst werden kann. Im zugespannten Zustand der Spannvorrichtung 8 klemmt das Klemmrohr 7 ein Mantelrohr 10 fest. Die Spannvorrichtung 8 ist als Nocken-Hubgetriebe ausgebildet. Es ist ebenfalls denkbar und möglich, die Spannvorrichtung als Kippstift-Spannvorrichtung oder Wälzkörper-Spannvorrichtung auszubilden. Generell ist jede Spannvorrichtung geeignet, die einen Hub bereitstellt, um das Mantelrohr 10 so elastisch zu verformen, dass das im Mantelrohr 10 aufgenommene Klemmrohr 7 geklemmt ist. Im Mantelrohr 10 ist die Lenkwelle 2 drehbar gelagert, wobei die Lenkwelle 2 mit einem Universalgelenk 200 auf der Lenkrad abgewandten Seite gekoppelt ist. D

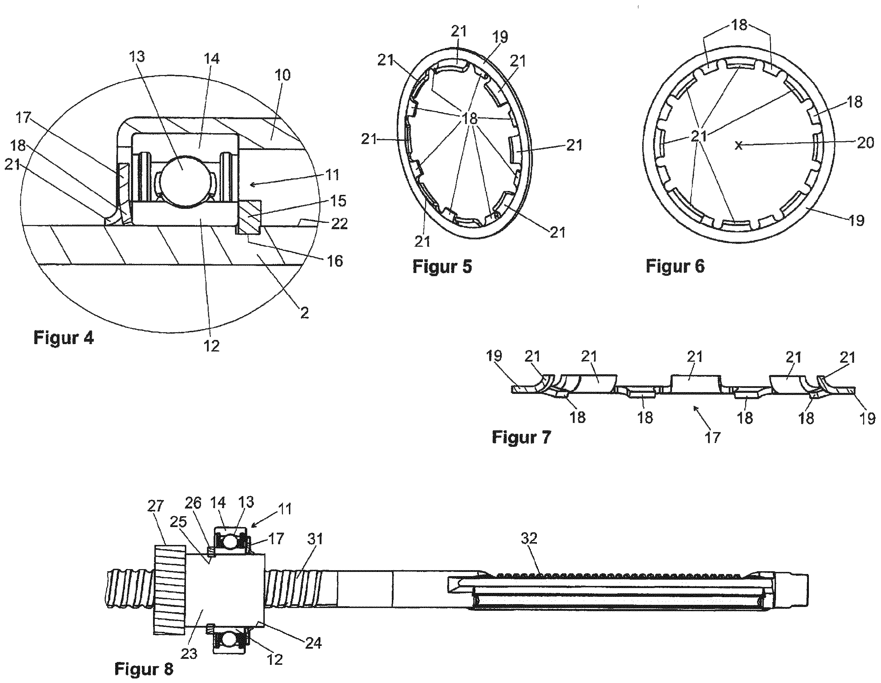

Wie man am besten in Figur 3 erkennt, ist am Mantelrohr 10 ein Drehlager 11 fixiert, welches auf der Lenkwelle 2 sitzt. In der vergrößerten Darstellung von Figur 4 kann man erkennen, dass das Drehlager als Kugellager ausgestaltet ist und eine innere Lagerschale 12, Kugeln 13 und eine äußere Lagerschale 14 aufweist. Die äußere Lagerschale 14 ist am Mantelrohr 10 fixiert, in dem die äußere Lagerschale auf einer Seite sich an einer Schulter abstützt und auf der anderen Seite das Mantelrohr 10 nach der Montage des Lagers 11 nach Innen umgebördelt ist. Die innere Lagerschale 12 ist an der Lenkwelle 2 fixiert, die hierfür auf der rechten Axialseite der inneren Lagerschale 12 mit einem Sprengring 15 versehen ist, der in eine umlaufende Nut 16 der Lenkwelle 2 eingesetzt ist. Auf der linken Axialseite ist die innere Lagerschale 12 mittels eines erfindungsgemäßen Halterings 17 fixiert.

Wie man am besten in den Figuren 5 bis 7 erkennt, besitzt der Haltering 17 acht über seinen Umfang verteilte Federzungen 18, die von einem umlaufenden Ringkörper 19 ausgehend radial nach innen ragen und gegenüber einer zur Drehachse 20 der Lenkwelle 2 orthogonalen Ebene abgewinkelt angeordnet sind. Die beschriebene Ebene ist in Figur 6 mit der Papierebene identisch. Die Federzungen 18 sind so abgewinkelt, dass sie axial in Richtung des Drehlagers 11 vorstehen und im eingebauten Zustand des Halterings 17 axial federnd an der inneren Lagerschale 12 des Drehlagers 11 anliegen, wodurch sie die innere Lagerschale 12 in axialer Richtung gegen den Sprengring 15 drücken und somit das Drehlager 11 auf der Lenkwelle 2 fixieren.

Um die elastische Vorspannung der Federzungen 18 zu erzeugen, muss sich der Haltering 17 auf der Lenkwelle 2 abstützen. Hierfür sind acht vom Ringkörper 19 des Halterings 17 radial nach innen ragende Fixierzungen 21 vorgesehen, deren radiale Ausdehnung nach innen etwas größer ist als die der Federzungen 18. Die Fixierzungen 21 ragen daher im entspannten Zustand des nicht montierten Halterings 17 bis in den radialen Bereich einer zylindrischen Außenfläche 22 der Lenkwelle 2. Des Weiteren sind die Fixierzungen 21 in eine dem Drehlager 11 abgewandte Richtung, in Figur 4 nach links, gebogen ausgestaltet, stehen also vom Ringkörper 19 des Halterings 17 axial in einer der Abwinklung der Federzungen 18 entgegengesetzte Richtung ab. Dies kann man am besten in Figur 7 erkennen. Die acht Federzungen 18 und die acht Fixierzungen 21 sind in Umfangsrichtung des Halterings 17 verteilt und abwechselnd zueinander angeordnet.

Beim Aufschieben des Halterings 17 auf die Lenkwelle 2 in axialer Richtung, in Figur 4 von links nach rechts, werden die Fixierzungen 21 durch die Lenkwelle 2 elastisch ausgelenkt, wobei sie einerseits axial entgegen der Aufschieberichtung, d.h. in Figur 2 nach links, und dabei gleichzeitig radial nach außen ausgelenkt werden, bis sie einen Bereich mit dem Radius der Lenkwelle 2 freigegeben, so dass die Lenkwelle 2 hindurchpasst. Der Haltering 17 wird dann in axialer Richtung weiter über die zylindrische Außenfläche 22 der Lenkwelle 2 geschoben, bis die Federzungen 18 an der inneren Lagerschale 12 des Drehlagers 11 axial federnd anliegen.

Die im eingebauten Zustand des Halterings 17 vorgespannten Fixierzungen 21 liegen jetzt fest an der zylindrischen Außenfläche 22 der Lenkwelle 2 an und drücken mit einer erheblichen Radialkraft gegen die zylindrische Außenfläche 22, so dass der Haltering 17 nur noch unter Aufwendung erheblicher Kräfte verschoben werden kann. Wenn jetzt die axiale Vorspannung der Federzungen 21 den Haltering 17 nach links zu verschieben versucht, werden die Fixierzungen 21 aufgrund ihrer gebogenen Form mit einer Verstärkung der ohnehin durch ihre elastische Vorspannung bedingten radialen Kraftkomponente reagieren, so dass sich eine radial innenliegende Kante der Fixierzungen 21 in das Material der zylindrischen Außenfläche 22 der Lenkwelle 2 eingräbt und dadurch eine axiale Verschiebung des Halterings 17 nach links wirkungsvoll verhindert. Der Haltering 17 sitzt daher auf der Lenkwelle 2 praktisch so fest wie wenn die Fixierzungen 21 in eine Nut der Lenkwelle 2 eingreifen würden, da durch das Eingraben des Halterings eine formschlüssige Abstützung erzeugt wird.

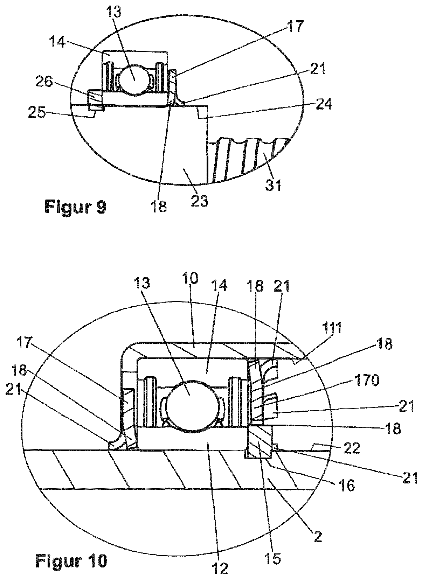

In einer weiteren Anwendungsform des erfindungsgemäßen Halterings ist das drehbare Bauteil eine KGT-Mutter 23 eines Kugelgewindetriebs einer elektrischen Servolenkung, die in den Figuren 8 und 9 dargestellt ist. Die KGT-Mutter 23 hat ebenfalls eine zylindrische Außenfläche 24, auf der ein aus innerer Lagerschale 12, Kugeln 13 und äußerer Lagerschale 14 bestehendes Drehlager 11 angeordnet ist. Genauso wie bei der Lenkwelle 2 ist die zylindrische Außenfläche 24 mit einer umlaufenden Nut 25 versehen, in die ein Sprengring 26 eingesetzt ist. Der auf der linken Axialseite der inneren Lagerschale 12 angeordnete Sprengring 26 stützt die innere Lagerschale 12 in axialer Richtung ab.

Der Haltering 17 wird axial von rechts nach links auf die zylindrische Außenfläche 24 der KGT-Mutter 23 aufgeschoben, bis die Federzungen 18 an der rechten Axialfläche der inneren Lagerschale 12 anliegen. Die Verankerung der Fixierzungen 21 auf der zylindrischen Außenfläche 24 der KGT-Mutter 23 erfolgt sinngemäß auf dieselbe Weise wie im oben beschriebenen Ausführungsbeispiel mit der Lenkwelle 2.

Für die Lenkbetätigung besitzt die KGT-Mutter 23 auf ihrer linken Axialseite ein Riemenrad 27, welches mit einem in Figur 1 erkennbaren Zahnriemen 28 mit einem Zahnrad 29 auf der Welle eines Elektromotors 30 verbunden ist. Wenn sich der Elektromotor 30 dreht, treibt der Zahnriemen 28 das Riemenrad 27 der KGT-Mutter 23 an, die dadurch ebenfalls gedreht wird. Die KGT-Mutter 23 sitzt auf einer Spindel 31, die ihrerseits mit einer Zahnstange 32 verbunden ist. Die Zahnstange 32 ist wiederum mit einer Spurstange 33 verbunden, mittels derer ein lenkbares Fahrzeugrad geschwenkt werden kann. Auf ihrer der Zahnstange 32 entgegengesetzten Seite ist die Spindel 31 mit einer weiteren Spurstange 34 verbunden, die ein weiteres lenkbares Fahrzeugrad 333 verschwenkt. Da die KGT-Mutter 23 mittels des Drehlagers 11 in axialer Richtung fixiert ist, führt eine Drehung der KGT-Mutter 23 dazu, dass sich die Spindel 31 in Axialrichtung verschiebt und über die Spurstangen 33, 34 ein Einschlagen der gelenkten Fahrzeugräder 333 bewirkt.

In der Figur 10 ist eine ein vergrößertes Detail eines Drehlagers 11 einer Lenkwelle 2 in einer alternativen Ausführungsform eines Halterings 170 dargestellt. Der Haltering 170 dient zur axialen Fixierung eines Drehlagers 11 in einem als gehäuseartiges Bauteil ausgebildeten Manteleinheit 10 mit einer zylinderförmigen Innenfläche 111 in die eine äußere Lagerschale 14 des Drehlagers 11 eingesteckt ist, wobei der Haltering 170 Federzungen 18 aufweist, die in axialer Richtung federnd an der äußeren Lagerschale 12 anliegt. Der Haltering 170 weist weiterhin radial nach außen ragende elastische Fixierzungen 21 auf, die sich im entspannten Zustand bis in den radialen Bereich des gehäuseartigen Bauteils 10 erstrecken, so dass sie beim Einschieben des Halterings 170 in die zylinderförmige Innenfläche 111 des Mantelrohrs 10 elastisch in eine der Einschieberichtung entgegengesetzte axiale Richtung ausgelenkt werden und an der Innenfläche 111 des gehäuseartigen Bauteils 10 mit radialer Vorspannkraft anliegen.

Die im eingebauten Zustand des Halterings 170 vorgespannten Fixierzungen 21 liegen jetzt fest an der zylindrischen Innenfläche 111 des Mantelrohrs 10 an und drücken mit einer Radialkraft gegen die zylindrische Innenfläche 111, so dass der Haltering 170 nur noch unter Aufwendung erheblicher Kräfte verschoben werden kann.

Der erfindungsgemäße Haltering 17, 170 kann auf dem jeweiligen drehbaren Bauteil oder in ein Gehäuse welches zur Lagerung eines drehbaren Bauteils ausgebildet ist, beispielsweise Lenkwelle 2, einer KGT-Mutter 23 oder einem Mantelrohr 10 auf einfache Weise durch Aufschieben bzw. Einschieben unverrückbar fest montiert werden, ohne dass das jeweilige drehbare Bauteil mit einer Nut für die Verankerung des Halterings 17, 170 versehen werden müsste. Dadurch wird die Herstellung des jeweiligen drehbaren Bauteils vereinfacht und Herstellungskosten eingespart.

Soweit anwendbar, können alle einzelnen Merkmale und vorteilhaften Weiterbildungen, die in den einzelnen Ausführungsbeispielen dargestellt sind, miteinander kombiniert und/oder ausgetauscht werden und/oder sinngemäß von dem einen auf das andere Ausführungsbeispiel übertragen werden, ohne den Bereich der Erfindung zu verlassen.

### BEZUGSZEICHENLISTE

- 1: Lenksäule
- 2: Lenkwelle
- 3: Lenkwelle
- 4: Lenkwelle
- 5: Lenkrad
- 6: Träger
- 7: Klemmrohr
- 8: Spannvorrichtung
- 9: Betätigungshebel
- 10: Mantelrohr
- 11: Drehlager
- 12: innere Lagerschale
- 13: Kugeln
- 14: äußere Lagerschale
- 15: Sprengring
- 16: Nut
- 17,170: Haltering
- 18: Federzunge
- 19: Ringkörper
- 20: Drehachse
- 21: Fixierzunge
- 22: zylindrische Außenfläche
- 23: KGT-Mutter
- 24: zylindrische Außenfläche
- 25: Nut
- 26: Sprengring
- 27: Riemenrad
- 28: Zahnriemen
- 29: Zahnrad
- 30: Elektromotor
- 31: Spindel
- 32: Zahnstange
- 33: Spurstange
- 34: Spurstange

## Patentansprüche

1. Lenkvorrichtung (1) für Kraftfahrzeuge, umfassend ein Drehlager (11) und einen Haltering (17) für die axiale Fixierung eines Drehlagers (11) an einem drehbaren Bauteil (2, 23) mit einer zylinderförmigen Außenfläche (22, 24), auf die eine innere Lagerschale (12) des Drehlagers (11) aufgesteckt ist, wobei der Haltering (17) zumindest eine Federzunge (18) aufweist, die in axialer Richtung federnd an der inneren Lagerschale (12) anliegt, **dadurch gekennzeichnet, dass** der Haltering (17) radial nach innen ragende elastische Fixierzungen (21) aufweist, die sich im entspannten Zustand bis in den radialen Bereich des drehbaren Bauteils (2, 23) erstrecken, so dass sie beim Aufschieben des Halterings (17) auf die zylinderförmige Außenfläche (22, 24) des drehbaren Bauteils (2, 23) elastisch in eine der Aufschieberichtung entgegengesetzte axiale Richtung ausgelenkt werden und an der zylinderförmigen Außenfläche (22, 24) des drehbaren Bauteils (2, 23) mit radialer Vorspannkraft anliegen.

2. Lenkvorrichtung nach Anspruch 1, **dadurch gekennzeichnet, dass** die Fixierzungen (21) in eine dem Drehlager (11) abgewandte Richtung gebogen ausgestaltet sind.

3. Lenkvorrichtung nach Anspruch 1 oder 2, **dadurch gekennzeichnet, dass** die Fixierzungen (21) mit radial inneren Kanten gegen die zylinderförmige Außenfläche (22, 24) des drehbaren Bauteils (2, 23) drücken und sich in die Außenfläche (22, 24) eingraben.

4. Lenkvorrichtung nach einem der vorhergehenden Ansprüche, **dadurch gekennzeichnet, dass** mehrere radial nach innen ragende Federzungen (18) vorgesehen sind, die in Richtung des Drehlagers (11) abgewickelt sind.

5. Lenkvorrichtung nach Anspruch 4, **dadurch gekennzeichnet, dass** die Federzungen (18) gegenüber einer zur Drehachse des drehbaren Bauteils (2, 23) orthogonalen Ebene einen Winkel zwischen 15° und 45° aufweisen.

6. Lenkvorrichtung nach Anspruch 4 oder 5, **dadurch gekennzeichnet, dass** die Federzungen (18) abwechselnd mit den Fixierzungen (21) in Umfangsrichtung verteilt angeordnet sind.

7. Lenkvorrichtung nach einem der vorhergehenden Ansprüche, **dadurch gekennzeichnet, dass** der Haltering (17) aus Federstahl besteht.

8. Lenkvorrichtung nach einem der vorhergehenden Ansprüche, **dadurch gekennzeichnet, dass** das drehbare Bauteil eine Lenkwelle (2) ist.

9. Lenkvorrichtung nach einem der Ansprüche 1 bis 7, **dadurch gekennzeichnet, dass** das drehbare Bauteil eine KGT-Mutter (23) einer elektrischen Servolenkung ist.

10. Lenkvorrichtung (1) für Kraftfahrzeuge, umfassend ein Drehlager (11) und einen Haltering für die axiale Fixierung eines Drehlagers (11) einer Lenkvorrichtung für ein Kraftfahrzeug in einem gehäuseartigen Bauteil (10) mit einer zylinderförmigen Innenfläche (111) in die eine äußere Lagerschale (14) des Drehlagers (11) eingesteckt ist, wobei der Haltering (170) zumindest eine Federzunge (18) aufweist, die in axialer Richtung federnd an der äußeren Lagerschale (14) anliegt, **dadurch gekennzeichnet, dass** der Haltering (170) radial nach außen ragende elastische Fixierzungen (21) aufweist, die sich im entspannten Zustand bis in den radialen Bereich des gehäuseartigen Bauteils (10) erstrecken, so dass sie beim Einschieben des Halterings (170) in die zylinderförmige Innenfläche (111) des gehäuseartigen Bauteils (10) elastisch in eine der Einschieberichtung entgegengesetzte axiale Richtung ausgelenkt werden und an der zylinderförmigen Innenfläche (111) des gehäuseartigen Bauteils (10) mit radialer Vorspannkraft anliegen.

## Claims

1. Steering apparatus (1) for motor vehicles, comprising a rotary bearing (11) and a holding ring (17) for the axial fixing of a rotary bearing (11) on a rotatable component (2, 23) with a cylindrical outer surface (22, 24) onto which an inner bearing shell (12) of the rotary bearing (11) is mounted, wherein the holding ring (17) comprises at least one spring tongue (18) which lies in an axial direction resiliently against the inner bearing shell (12), **characterized in that** the holding ring (17) comprises radially inwardly projecting elastic fixing tongues (21) which, in the relaxed state, extend into the radial region of the rotatable component (2, 23) such that, when the holding ring (17) is pushed onto the cylindrical outer surface (22, 24) of the rotatable component (2, 23), said fixing tongues are deflected elastically in an axial direction opposite to the pushing-on direction and lie with a radial preload force against the cylindrical outer surface (22, 24) of the rotatable component (2, 23).

2. Steering apparatus according to Claim 1, **characterized in that** the fixing tongues (21) are designed to be bent in a direction averted from the rotary bearing (11).

3. Steering apparatus according to Claim 1 or 2, **characterized in that** the fixing tongues (21) press with radially inner edges against the cylindrical outer surface (22, 24) of the rotatable component (2, 23) and dig into the outer surface (22, 24).

4. Steering apparatus according to any of the preceding claims, **characterized in that** multiple radially inwardly projecting spring tongues (18) are provided which are unwound in the direction of the rotary bearing (11).

5. Steering apparatus according to Claim 4, **characterized in that** the spring tongues (18) are at an angle of between 15° and 45° with respect to a plane orthogonal to the axis of rotation of the rotatable component (2, 23).

6. Steering apparatus according to Claim 4 or 5, **characterized in that** the spring tongues (18) are arranged so as to be distributed in an alternating manner with the fixing tongues (21) in a circumferential direction.

7. Steering apparatus according to any of the preceding claims, **characterized in that** the holding ring (17) is composed of spring steel.

8. Steering apparatus according to any of the preceding claims, **characterized in that** the rotatable component is a steering shaft (2).

9. Steering apparatus according to any of Claims 1 to 7, **characterized in that** the rotatable component is a ball-screw drive nut (23) of an electric servo steering system.

10. Steering apparatus (1) for motor vehicles, comprising a rotary bearing (11) and a holding ring for the axial fixing of a rotary bearing (11) of a steering apparatus for a motor vehicle in a housing-like component (10) with a cylindrical inner surface (111) into which an outer bearing shell (14) of the rotary bearing (11) is inserted, wherein the holding ring (170) comprises at least one spring tongue (18) which lies in an axial direction resiliently against the outer bearing shell (14), **characterized in that** the holding ring (170) comprises radially outwardly projecting elastic fixing tongues (21) which, in the relaxed state, extend into the radial region of the housing-like component (10) such that, when the holding ring (170) is pushed into the cylindrical inner surface (111) of the housing-like component (10), said fixing tongues are deflected elastically in an axial direction opposite to the pushing-in direction and lie with a radial preload force against the cylindrical inner surface (111) of the housing-like component (10).

## Revendications

1. Dispositif de direction (1) pour véhicules automobiles, comprenant un palier pivotant (11) et une bague de retenue (17) pour la fixation axiale d'un palier pivotant (11) à un composant rotatif (2, 23) ayant une surface extérieure cylindrique (22, 24) sur laquelle est enfichée une coque de palier intérieure (12) du palier pivotant (11), la bague de retenue (17) présentant au moins une langue à ressort (18) qui s'applique élastiquement dans la direction axiale contre la coque de palier intérieure (12), **caractérisé en ce que** la bague de retenue (17) présente des langues de fixation élastiques (21) saillant radialement vers l'intérieur qui, dans l'état détendu, s'étendent jusque dans la région radiale du composant rotatif (2, 23), de telle sorte que lors de la poussée de la bague de retenue (17) sur la surface extérieure cylindrique (22, 24) du composant rotatif (2, 23), elles soient déviées élastiquement dans une direction axiale opposée à la direction de poussée et qu'elles s'appliquent contre la surface extérieure cylindrique (22, 24) du composant rotatif (2, 23) avec une force de précontrainte radiale.

2. Dispositif de direction selon la revendication 1, **caractérisé en ce que** les langues de fixation (21) sont configurées sous forme cintrée dans une direction opposée au palier pivotant (11).

3. Dispositif de direction selon la revendication 1 ou 2, **caractérisé en ce que** les langues de fixation (21) pressent avec des bords radialement intérieurs contre la surface extérieure cylindrique (22, 24) du composant rotatif (2, 23) et s'incrustent dans la surface extérieure (22, 24).

4. Dispositif de direction selon l'une quelconque des revendications précédentes, **caractérisé en ce que** plusieurs langues à ressort (18) saillant radialement vers l'intérieur sont prévues, lesquelles sont déployées dans la direction du palier pivotant (11).

5. Dispositif de direction selon la revendication 4, **caractérisé en ce que** les langues à ressort (18), par rapport à un plan orthogonal à l'axe de rotation du composant rotatif (2, 23), présentent un angle compris entre 15° et 45°.

6. Dispositif de direction selon la revendication 4 ou 5, **caractérisé en ce que** les langues à ressort (18) sont réparties en alternance avec les langues de fixation (21) dans la direction périphérique.

7. Dispositif de direction selon l'une quelconque des revendications précédentes, **caractérisé en ce que** la bague de retenue (17) se compose d'acier à ressort.

8. Dispositif de direction selon l'une quelconque des revendications précédentes, **caractérisé en ce que** le composant rotatif est un arbre de direction (2).

9. Dispositif de direction selon l'une quelconque des revendications 1 à 7, **caractérisé en ce que** le composant rotatif est un écrou KGT (23) d'une direction assistée électrique.

10. Dispositif de direction (1) pour véhicules automobiles, comprenant un palier pivotant (11) et une bague de retenue pour la fixation axiale d'un palier pivotant (11) d'un dispositif de direction pour un véhicule automobile dans un composant de type boîtier (10) ayant une surface intérieure cylindrique (111) dans laquelle est enfichée une coque de palier extérieure (14) du palier pivotant (11), la bague de retenue (170) présentant au moins une langue à ressort (18) qui s'applique élastiquement dans la direction axiale contre la coque de palier extérieure (14), **caractérisé en ce que** la bague de retenue (170) présente des langues de fixation élastiques saillant radialement vers l'extérieur (21) qui, dans l'état détendu, s'étendent jusque dans la région radiale du composant de type boîtier (10), de telle sorte que lors de l'enfoncement de la bague de retenue (170) dans la surface intérieure cylindrique (111) du composant de type boîtier (10), elles soient déviées élastiquement dans une direction axiale opposée à la direction d'enfoncement et qu'elles s'appliquent contre la surface intérieure cylindrique (111) du composant de type boîtier (10) avec une force de précontrainte radiale.
